(19) Europäisches Patentamt / European Patent Office / Office européen des brevets

(11) **EP 1 923 553 A2**

## (12) EUROPEAN PATENT APPLICATION

(43) Date of publication:
    **21.05.2008 Bulletin 2008/21**

(51) Int Cl.:
    **F02C 9/28** (2006.01)    **F01D 15/08** (2006.01)

(21) Application number: **07120815.1**

(22) Date of filing: **15.11.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(30) Priority: **16.11.2006  US 859343 P**<br>          **12.04.2007  US 734651**<br><br>(71) Applicant: **Honeywell International, Inc.**<br>**Morristown, NJ 07962 (US)** | (72) Inventors:<br>• **Vasquez, John A.**<br>  **Chandler, AZ  Arizona 85224 (US)**<br>• **Banta, Paul W.**<br>  **Phoenix, AZ Arizona 85048 (US)**<br><br>(74) Representative: **Buckley, Guy Julian**<br>**Patent Outsourcing Limited**<br>**1 King Street**<br>**Bakewell**<br>**Derbyshire DE45 1DZ (GB)** |

(54) **Multi-port bleed system with variable geometry ejector pump**

(57)    A bleed air system selectively supplies engine bleed air from one or more of at least three bleed air sources to a variable geometry ejector pump. The bleed air system provides improved performance over current systems, and decreases overall system weight and cost. The system includes a controllable valve stage that controllably directs bleed air from one or more of at least three bleed air sources to the variable geometry ejector pump.

FIG. 1

## Description

CROSS-REFERENCES TO RELATED APPLICATIONS

This application claims the benefit of U.S. Provisional Application No. 60/859,343 filed November 16, 2006.

TECHNICAL FIELD

The present invention relates to bleed air systems and, more particularly, to a bleed air system that selectively supplies engine bleed air from one or more of at least three bleed air sources to a variable geometry ejector pump.

BACKGROUND

A gas turbine engine may be used to supply power to various types of vehicles and systems. For example, gas turbine engines may be used to supply propulsion power to an aircraft. Many gas turbine engines include at least three major sections, a compressor section, a combustor section, and a turbine section. The compressor section, which may include two or more compressor stages, receives a flow of intake air and raises the pressure of this air to a relatively high level. The compressed air from the compressor section then enters the combustor section, where a ring of fuel nozzles injects a steady stream of fuel. The injected fuel is ignited by a burner, which significantly increases the energy of the compressed air.

The high-energy compressed air from the combustor section then flows into and through the turbine section, causing rotationally mounted turbine blades to rotate and generate energy. The air exiting the turbine section is then exhausted from the engine. Similar to the compressor section, in a multi-spool engine the turbine section may include a plurality of turbine stages. The energy generated in each of the turbines may be used to power other portions of the engine.

In addition to providing propulsion power, a gas turbine engine may also, or instead, be used to supply either, or both, electrical and pneumatic power to the aircraft. For example, some gas turbine engines include a bleed air port on the compressor section. The bleed air port allows some of the compressed air from the compressor section to be diverted away from the combustor and turbine sections, and used for other functions such as, for example, the aircraft environmental control system, and/or cabin pressure control system.

Regardless of its particular end use, the bleed air is preferably supplied at a sufficiently high pressure to provide proper flow through the system. As noted above, bleed air is extracted after it has been compressed, which increases the load on the turbine engine. Therefore, extra fuel consumption may result, and engine performance can be degraded. The engine performance penalty may be minimized by extracting the bleed air from the lowest compressor stage (or stages) that can supply the pressure required by the downstream systems. The ideal solution for performance would be to have the capability of extracting the bleed air from the compressor stage that exactly matches the downstream systems requirements throughout the operating envelope. Most modern commercial aircraft turbine engines have on the order of 10-12 compressor stages. For practical considerations, typical commercial aircraft bleed systems are limited to two discrete bleed air ports. Moreover, many conventional bleed air systems include a heat exchanger and a fan air valve (FAV) to limit the temperature of the bleed air supplied to some end-use systems. These components can increase overall system weight and, concomitantly, overall system cost. Moreover, the heat exchanger may be mounted outside of the aircraft and in a position that increases aerodynamic drag, which can increase fuel consumption.

Hence, there is a need for a bleed air system that exhibits less engine performance degradation than current systems and/or decreases overall system weight and cost and/or does not present aerodynamic drag. The present invention addresses one or more of these needs.

BRIEF SUMMARY

In one embodiment, and by way of example only, a bleed air control system includes a variable geometry ejector pump and a valve stage. The variable geometry ejector pump has a plurality of fluid inlets, and a fluid outlet. The valve stage is coupled to the variable geometry ejector pump and includes a first plurality of bleed air inlet ports and a second plurality of bleed air outlet ports. The first plurality of bleed air inlet ports is greater in number than the second plurality of bleed air outlet ports. Each of the bleed air inlet ports is adapted to receive a flow of bleed air from a separate bleed air source, and each of the bleed air outlet ports in fluid communication with one of the plurality of variable ejector pump fluid inlets. The valve stage is configured to selectively fluidly communicate one or more of the bleed air inlet ports with one or more of the bleed air outlet ports.

In another exemplary embodiment, a bleed air system includes a multi-stage compressor, a variable geometry ejector pump, and a valve stage. The multi-stage compressor has an air inlet, a compressed air outlet, and a plurality of bleed air supply ports. The compressor is configured to receive air via the air inlet and supply compressed air, at various pressure magnitudes, via the compressed air outlet and the plurality of bleed air supply ports. The variable geometry ejector pump has a plurality of fluid inlets, and a fluid outlet. The valve stage is coupled between the multi-stage compressor and the variable geometry ejector pump and includes a first plurality of bleed air inlet ports and a second plurality of bleed air outlet ports. The first plurality of bleed air inlet ports is greater in number than the second plurality of bleed air outlet ports. Each of the bleed air inlet ports is in fluid communication with one of the multi-stage compressor bleed air supply ports, and each of the bleed air outlet ports in fluid communication with one of the plurality of variable ejector pump fluid inlets. The valve stage is configured to selectively fluidly communicate one or more of the bleed air inlet ports with one or more of the bleed air outlet ports.

In yet another exemplary embodiment, a bleed air system includes a gas turbine engine, a variable geometry ejector pump, and a valve stage. The gas turbine engine includes a turbine and a multi-stage compressor. The turbine is coupled to and is operable to selectively drive the multi-stage compressor. The multi-stage compressor has an air inlet, a compressed air outlet, and first, second, and third bleed air supply ports. The compressor is configured, upon being driven by the turbine, to receive air via the air inlet and at least supply compressed air at first, second, and third pressure magnitudes via the first, second, and third bleed air supply ports, respectively. The variable geometry ejector pump has a first fluid inlet, a second fluid inlet, and a fluid outlet. The valve stage is coupled between the multi-stage compressor and the variable geometry ejector pump, and includes a first bleed air inlet port, a second bleed air inlet port, a third bleed air inlet port, a first bleed air outlet port, and a second bleed air outlet port. The first, second, and third bleed air inlet ports are in fluid communication with the first, second, and third bleed air supply ports, respectively. The first and second bleed air outlet ports are in fluid communication with the variable ejector pump first and second fluid inlets, respectively. The valve stage is configured to selectively fluidly communicate one or more of the first, second, and third bleed air inlet ports with one or more of the first and second bleed air outlet ports.

BRIEF DESCRIPTION OF THE DRAWINGS

The present invention will hereinafter be described in conjunction with the following drawing figures, wherein like numerals denote like elements, and wherein:

FIG. 1 is a simplified representation of a bleed air system 1000 according to an exemplary embodiment of the present invention;

FIGS. 2A and 2B are schematic representations of different embodiments of a valve stage that may be used to implement the system of FIG. 1;

FIG. 3 is simplified representation of an exemplary embodiment of a variable geometry ejector pump that may be used to implement the system of FIG. 1;

FIGS. 4 and 5 are simplified representations of exemplary alternative embodiments of a variable geometry ejector pump that may be used to implement the system of FIG. 1; and

FIGS. 6-10 are graphs depicting an analytical comparison of various parameters associated a conventional bleed air system and a bleed air system configured according to an embodiment of the present invention.

DETAILED DESCRIPTION OF VARIOUS PREFERRED EMBODIMENTS

The following detailed description is merely exemplary in nature and is not intended to limit the invention or the application and uses of the invention. Furthermore, there is no intention to be bound by any theory presented in the preceding background or the following detailed description. In this regard, although the present embodiment is, for ease of explanation, depicted and described as being implemented in an aircraft gas turbine engine bleed air system, it will be appreciated that it can be implemented in various other systems and environments,

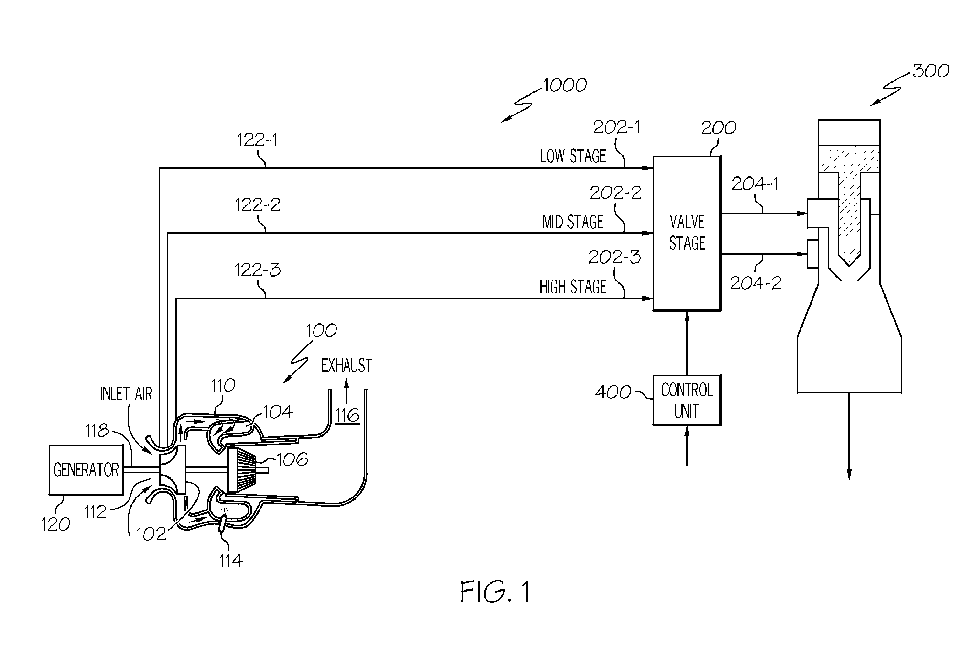

Turning now to FIG. 1, a simplified representation of a bleed air system 1000 that may be used to supply bleed air to, for example, an environmental control system, is depicted. The system 1000 includes a gas turbine engine 100, a valve stage 200, and a variable geometry ejector pump 300. The gas turbine engine 100 includes a compressor 102, a combustor 104, and a turbine 106, all disposed within a case 110. The compressor 102, which is preferably a multi-stage compressor, raises the pressure of air directed into it via an air inlet 112. The compressed air is then directed into the combustor 104, where it is mixed with fuel supplied from a fuel source (not shown). The fuel/air mixture is ignited using one or more igniters 114, and high energy combusted air is then directed into the turbine 106. The combusted air expands through the turbine 106, causing it to rotate. The air is then exhausted via an exhaust gas outlet 116. As the turbine 106 rotates, it drives, via a shaft 118 coupled to the turbine 106, equipment in, or coupled to, the engine 100. For example, in the depicted embodiment the turbine 106 drives the multi-stage compressor 102 and a generator 120 coupled to the engine 100. It will be appreciated that the gas turbine engine 100 is not limited to the configuration depicted in FIG. 1 and described herein, but could be any one of numerous types of gas turbine engines, such as a turbofan gas turbine engine that includes multiple turbines, multiple spools, multiple compressors, and a fan. Moreover, a gas turbine engine need not be the source of the bleed air that is supplied to the remainder of the system 1000.

Preferably, a plurality of bleed air ducts 122 are coupled between the multi-stage compressor 102 and the valve stage 200. The bleed air ducts 122, which in the depicted embodiment include a low-pressure stage duct 122-1, a mid-pressure stage duct 122-2, and a high-pressure stage duct 122-3, are each in fluid communication with different stages in the multi-stage compressor 102. Preferably, as each duct nomenclature denotes herein, the low-pressure stage duct 122-1 is in fluid communication with a relatively low-pressure compressor stage, the mid-pressure stage duct 122-2 is in fluid communication with a relatively mid-pressure compressor stage, and the high-pressure stage duct 122-3 is in fluid communication with a relatively high-pressure compressor stage. The particular compressor stages may vary depending, for example, on the engine and/or compressor design and on the functional specifications of the bleed air load. Preferably, the low-pressure stage is chosen such that its outlet temperature will not exceed a maximum value as defined by the downstream system, the mid-pressure stage is chosen to optimize the efficiency of the bleed air extraction over the operating envelope, and the high-pressure stage is chosen such that its minimum outlet pressure is sufficiently high to supply the downstream systems. In one particular embodiment, the low-pressure stage, mid-pressure stage, and high-pressure stage are a third stage, a fourth stage, and a tenth stage, respectively. It will additionally be appreciated that the system 1000 could be implemented with more than three bleed air ducts 122 coupled to more than three different compressor stages, if needed or desired.

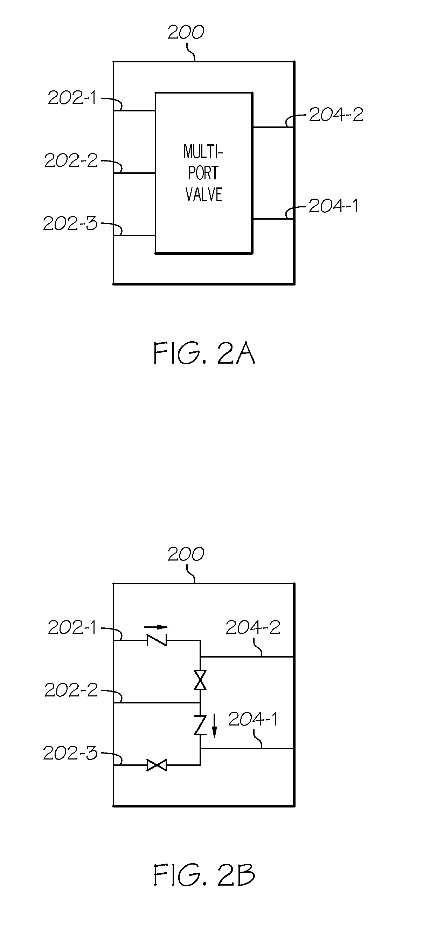

Bleed air from each of the compressor stages is supplied to the valve stage 200. The valve stage 200 is coupled between each of the bleed air ducts 122 and the variable geometry ejector pump 300 and, at least in the depicted embodiment, includes three inlet ports 202 and two outlet ports 204. In particular, the valve stage 200 includes a low-pressure bleed air inlet port 202-1, a mid-pressure bleed air inlet port 202-2, a high-pressure bleed air inlet port 202-3, a high-pressure bleed air outlet port 204-1, and a low-pressure bleed air outlet port 204-2. The valve stage 200 may be implemented as a multi-port valve, a plurality of control valves, or various combinations thereof. An example of a multi-port valve embodiment is depicted in FIG. 2A, and an example of a plurality of independent control valves is depicted in FIG. 2B. No matter its specific physical implementation, the valve stage 200 is configured to selectively allow bleed air from one or more of the three bleed air conduits 122 to flow out one or more of the bleed air outlet ports 204. In the depicted embodiment, the valve stage 200 is controlled by a control unit 400, which is configured to supply appropriate commands to the valve stage 200. The valve stage 200, in response to the commands from the control unit 400, selectively allows bleed air from one or more of the three bleed air conduits 122 to flow out one or more of the bleed air outlet ports 204 to the variable geometry ejector pump 300. It will be appreciated that the control unit 400 could be implemented as a stand-alone device that is used to control the operation of the valve stage 200 only, or one or more other devices. It will additionally be appreciated that the function of the control unit 400 could be implemented in another control device such as, for example, an engine controller.

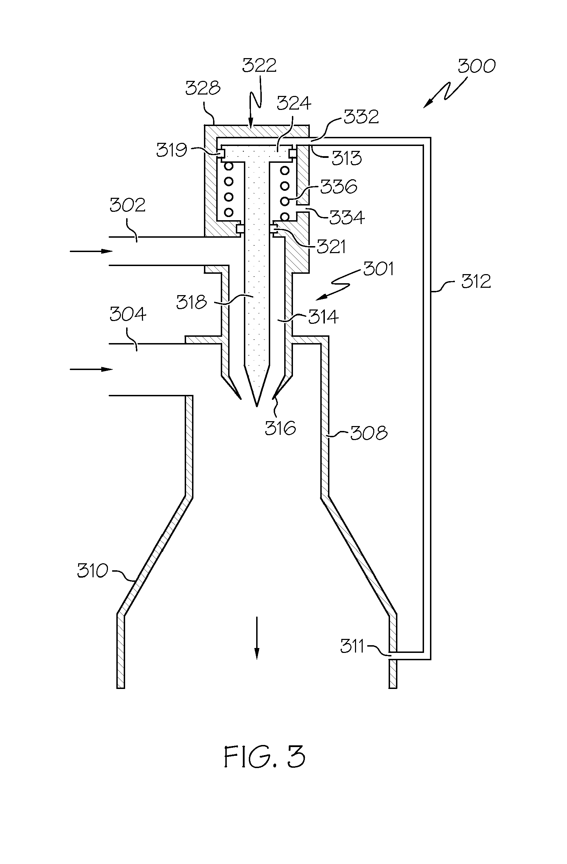

The variable geometry ejector pump 300 may be implemented using various configurations. One exemplary embodiment, which is configured to use integral downstream feedback, is shown more clearly in FIG. 3. This variable geometry ejector pump 300 includes a primary inlet 302, a secondary inlet 304, a variable geometry ejector 301, a mixing section 308, a diffuser 310, and a feedback conduit 312. The primary inlet 302 is coupled to the valve stage high-pressure outlet port 204-1, and the secondary inlet 304 is coupled to the valve stage low-pressure outlet port 204-2. Depending on how the control unit 400 commands the valve stage 200, the primary inlet 302 and the secondary inlet 304 may simultaneously receive a flow of bleed air from the valve stage 200, or only one of the inlets 302, 304 may receive may receive a flow of bleed air. Preferably, however, if both inlets 302, 304 are simultaneously receiving bleed air flow from the valve stage 200, the bleed air having the higher relative pressure (and thus higher relative temperature) is supplied to the primary inlet 302 and the bleed air having the lower relative pressure (and thus lower relative temperature) is supplied to the secondary inlet 304.

The variable geometry ejector 301 includes flow passage 314, an outlet nozzle 316, a valve element 318, and an actuator 322. The flow passage 314 fluidly communicates the primary inlet 302 with the outlet nozzle 316. The valve element 318 is movably disposed at least partially within the flow passage 314 and its position controls bleed air flow through the flow passage 314 and the outlet nozzle 316, to thereby control the flow of bleed air from the primary inlet 302 into the mixing section 308.

The position of the valve element 318 is controlled by the actuator 322, which may include a piston 324, and a bias spring 326. The piston 324 is coupled to the valve element 318 and is disposed in an actuator enclosure 328. The bias spring 326 is disposed between the piston 324 and the actuator enclosure 328 and supplies a bias force to the piston 324 that biases the valve element 318 toward an open position. The actuator enclosure 328 includes a control port 332 and a vent 334. There may additionally be a first seal 319 between the piston 324 and actuator enclosure 328, and a second seal 321 between the valve element 318 and the actuator enclosure 328. It will be appreciated that the actuator 322 may instead be an electrical or an electromechanical device.

Bleed air supplied to the secondary inlet 304 is supplied to the mixing section 308, where it mixes with bleed air that may be exiting the ejector pump outlet nozzle 316. It will be appreciated that, depending on the position of the valve element 318, there may be no bleed air exiting the ejector pump outlet nozzle 316. Nonetheless, bleed air in the mixing section 308 is then flows into and through the diffuser 310, and is supplied to, for example, an aircraft environmental control system and/or other bleed air load. As FIG. 1 also depicts, a portion of the bleed air flowing through the diffuser 310 is directed into the feedback conduit 312.

The feedback conduit 312 includes an inlet 311 and an outlet 313. The feedback conduit inlet 311 is in fluid communication with the diffuser 310, and the feedback conduit outlet 313 is in fluid communication with the actuator enclosure control port 328. Thus, the static pressure of the bleed air in the diffuser 310 is directed to the actuator piston 324. As such, bleed air static pressure in the diffuser 310 is used to control the position of the ejector pump valve element 318 and, concomitantly, the geometry of the ejector pump outlet nozzle 316 and ejector pump exit flow.

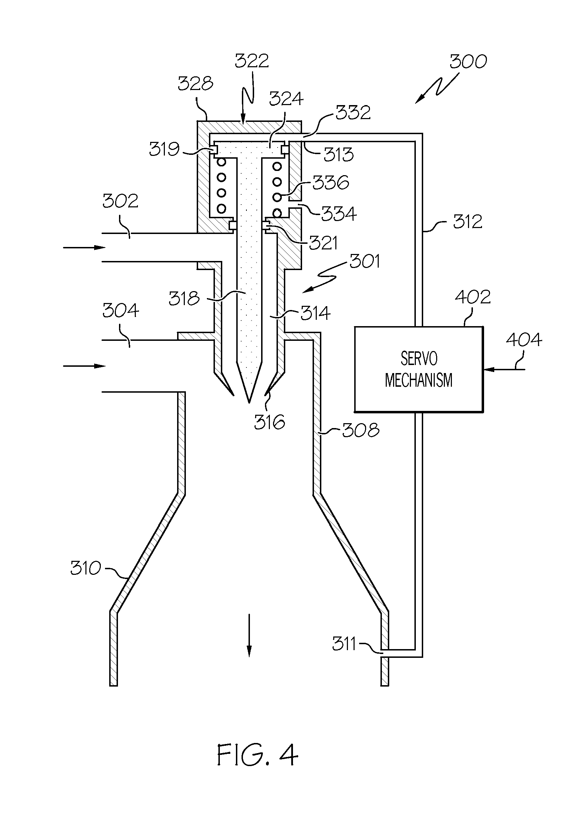

It is noted that the ejector pump 300 depicted in FIG. 3 is merely exemplary of one particular embodiment and, as was previously alluded to, the system 1000 could be implemented using variable geometry ejector pumps 300 of alternative configurations. For example, the ejector pump 300 depicted in FIG. 4 is substantially identical to that depicted in FIG. 3, but additionally includes a feedback control mechanism 402. The feedback control mechanism 402 is configured to position the ejector pump valve element 318 based on a control scheme using multiple input signals and accounting for changing requirements. The feedback mechanism 402, which may be implemented using any one of numerous feedback control mechanisms now known or developed in the future, is responsive to system inputs or commands 404 received from either a control unit or one or more signals representative of pressure and/or temperature downstream of, or within, the variable geometry ejector pump 300, or both. It will be appreciated that the signals representative of pressure and/or temperature may be pneumatic or electronic. It will additionally be appreciated that if the system inputs or commands 404 are supplied from a control unit, the control unit may be the same control unit 400 that is used to control the valve stage 200, or it may be implemented as a separate, independent control unit.

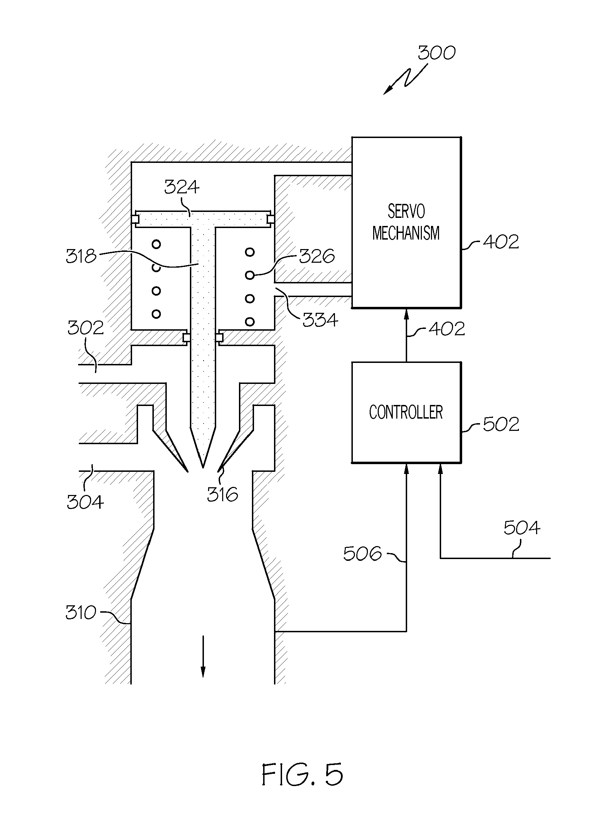

In yet another alternative embodiment, which is depicted in FIG. 5, the ejector pump 300 is configured similar to that depicted in FIG. 4, but the vent 334 is not in fluid communication with the ambient environment and the servomechanism 402 is not in fluid communication with diffuser 310. Rather, in this embodiment, the vent 334 is in fluid communication with the feedback control mechanism 402. Moreover, as FIG. 5 further depicts, a control unit 502 is preferably included to control the feedback control mechanism 402, which in turn controls the position of the ejector pump valve 318. In this embodiment, the control unit 502 may be implemented as either a pneumatic or electronic device, and is responsive to system inputs or commands 504 received from either a separate, non-illustrated control unit or system, and/or one or more signals 506 representative of pressure and/or temperature downstream of, or within, the variable geometry ejector pump 300, or both. It will be appreciated that the signals representative of pressure and/or temperature, if supplied, may be pneumatic or electronic. It will additionally be appreciated that if the system inputs or commands 504 are supplied from a control unit, this control unit may be the same control unit 400 that is used to control the valve stage 200, or it may be implemented as a separate, independent control unit.

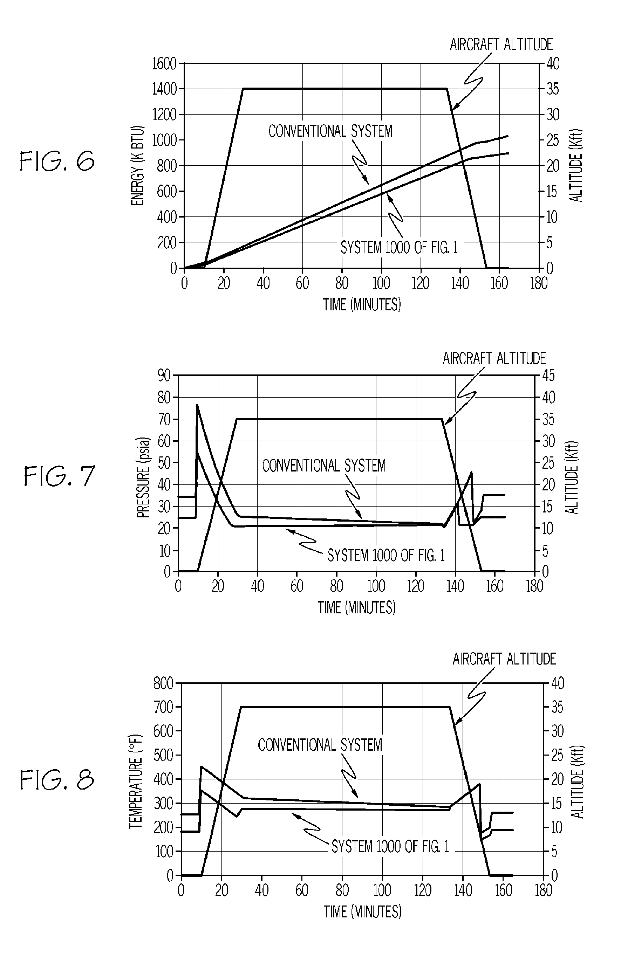

The bleed air system 1000 described herein provides increased performance over presently known systems. For example, an analytical comparison of the system 1000 depicted in FIG. 1 versus a conventional bleed air system that draws air from two compressor stages and includes a fan air valve and a heat exchanger was conducted and selected results are graphically depicted in FIGS. 6-10. The analysis was based on a simple model of a gas turbine engine with a 10-stage compressor, and conducted over a standard daytime flight profile with a maximum cruise altitude of 35,000 feet. The cumulative energy, which is depicted in FIG. 6, was calculated by integrating the following formula:

$$P = \dot{m} \times c_p \times \Delta T,$$

where P is the power associated with the delivered bleed air, m is the bleed air mass flow rate to the bleed air load, $c_p$ is the specific heat of air, and $\Delta T$ is the difference between delivered bleed air temperature and ambient temperature ($T_{bleed\ air\ delivered} - T_{ambient}$). The analysis further assumed a maximum cabin altitude of 8000 feet. Moreover, for the system 1000 of FIG. 1, the 3rd, 4th, and 10th compressor stages were used to supply bleed air to the valve stage 200, and the system 1000 was controlled so that delivered bleed air temperature did not exceed 400°F and the pressure did not drop below 20 psig. For the conventional system, the analysis assumed that the 4th and 10th compressor stages supply bleed air flow.

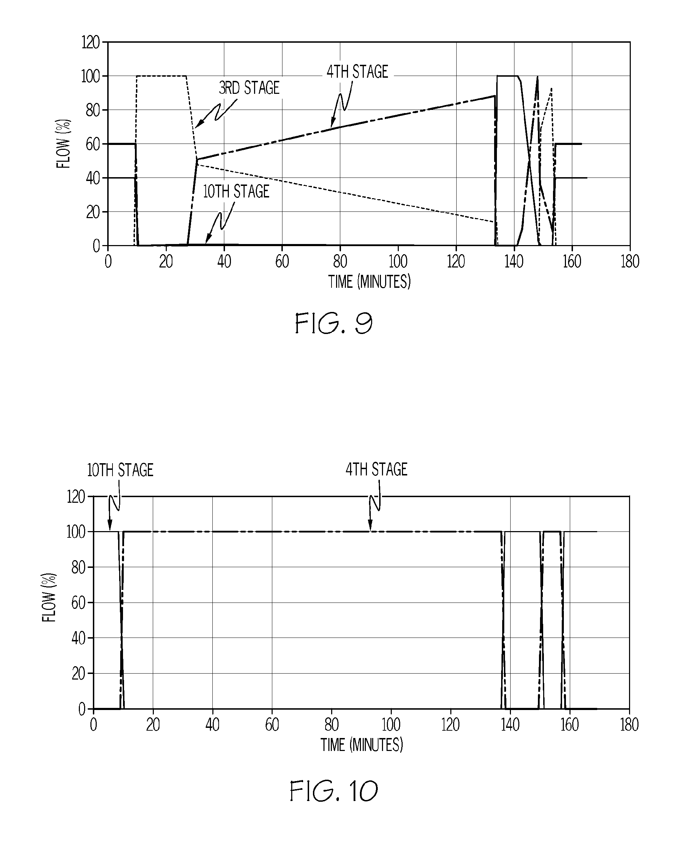

From the graphs depicted in FIG. 6-10, it is seen that the system 1000 uses less energy than the conventional system during a flight, delivers bleed air at similar, though slightly less pressure, and delivers bleed air at a lower temperature. The graphs in FIGS. 9 and 10 depict, for completeness, the flow percentage provided from the 3rd, 4th, and 10th stages and from the 4th and 10th stages, for the system 1000 of FIG. 1 and the conventional system, respectively.

With the bleed air system described herein, the valve stage and ejector pump are controlled to supply bleed air from the lowest compressor stage, or a mix of stages, to minimize the energy extraction from the engine, while maintaining sufficient pressure to satisfy bleed air load requirements. Thus, the bleed air system described herein exhibits less engine performance degradation than current systems and/or decreases overall system weight and cost and/or does not present aerodynamic drag.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention.

**Claims**

1. A bleed air control system (1000), comprising:

    a variable geometry ejector pump (300) having a plurality of fluid inlets (302), and a fluid outlet; and
    a valve stage (200) coupled to the variable geometry ejector pump (300) and including a first plurality of bleed air inlet ports (202) and a second plurality of bleed air outlet ports (204), each of the bleed air inlet ports (202) adapted to receive a flow of bleed air from a separate bleed air source, each of the bleed air outlet ports (204) in fluid communication with one of the plurality of variable ejector pump (300) fluid inlets (302), the valve stage (200) configured to selectively fluidly communicate one or more of the bleed air inlet ports (202) with one or more of the bleed air outlet ports (204),

    wherein the first plurality of bleed air inlet ports (202) is greater in number than the second plurality of bleed air outlet ports (204).

2. The system of Claim 1, further comprising:

    a multi-stage compressor (102) having an air inlet, a compressed air outlet, and a plurality of bleed air supply ports, the compressor (102) configured to receive air via the air inlet and supply compressed air, at various pressure magnitudes, via the compressed air outlet and the plurality of bleed air supply ports; and
    a plurality of bleed air conduits (122) coupled between the multi-stage compressor (102) and the valve stage (200), each bleed air conduit fluidly communicating one of the multi-stage compressor (102) bleed air supply ports with one of the valve stage (200) bleed air inlet ports (202).

3. The system of Claim 1, further comprising:

    a control unit (400) configured to selectively supply one or more commands (404) to the valve stage (200),

    wherein the valve stage (200) is responsive to the one or more commands (404) supplied thereto from the control unit (400) to selectively fluidly communicate one or more of the bleed air inlet ports (202) with one or more of the bleed air outlet ports (204).

4. The system of Claim 1, wherein the valve stage (200) comprises a plurality of control valves.

5. The system of Claim 1, wherein the valve stage (200) comprises one or more multi-port valves.

6. The system of Claim 1, wherein:

    the first plurality of valve stage bleed air inlet ports (202) comprises first, second, and third bleed air inlet ports (202-1, 202-2, 202-3); and
    the second plurality of valve stage bleed air outlet ports (204) comprises first and second bleed air outlet ports (204).

7. The system of Claim 6, wherein:

    the first bleed air inlet port (202-1) is coupled to receive bleed air at a first pressure magnitude;
    the second bleed air inlet port (202-2) is coupled to receive bleed air at a second pressure magnitude;
    the third bleed air inlet port (202-3) is coupled to receive bleed air at a third pressure magnitude;
    the second pressure magnitude is greater than the first pressure magnitude; and
    the third pressure magnitude is greater than the second magnitude.

8. The system of Claim 1, wherein the variable geometry ejector pump (300) comprises:

    a primary fluid inlet in fluid communication with a first one of the valve stage bleed air outlet ports (204);
    a secondary fluid inlet in fluid communication with a second one of the valve stage bleed air outlet ports (204);
    a variable geometry ejector (301) including at least a flow passage (314) and an outlet nozzle (316), the variable geometry ejector flow passage (314) in fluid communication with the primary fluid inlet port, and the variable geometry ejector (301) configured to controllably eject fluid supplied to the primary fluid inlet from the variable geometry ejector outlet nozzle (316);
    a mixing section (308) in fluid communication with the secondary inlet and the variable geometry ejector outlet nozzle (316).

9. The system of Claim 8, wherein the variable geometry ejector pump (300) further comprises:

    a diffuser (310) disposed downstream of, and in fluid communication with, the mixing section (308).

10. The system of Claim 9, wherein the variable geometry ejector pump (300) further comprises:

    a feedback conduit (312) including an inlet port (311) and an outlet port (332), the feedback conduit (312) inlet port in fluid communication with the diffuser (310), the feedback conduit (312) outlet port in fluid communication with the variable geometry ejector (301).

FIG.1

FIG. 2A

FIG. 2B

FIG. 3

FIG. 4

FIG. 5

FIG. 6

FIG. 7

FIG. 8

FIG. 9

FIG. 10

## REFERENCES CITED IN THE DESCRIPTION

### Patent documents cited in the description

- US 85934306 P